Europäisches Patentamt

European Patent Office

Office européen des brevets

(11) Publication number: **0 434 238 A2**

# (12) EUROPEAN PATENT APPLICATION

(21) Application number: **90312825.4**

(22) Date of filing: **26.11.90**

(51) Int. Cl.⁵: **A23G 3/20, A23G 3/02**

(30) Priority: **01.12.89 GB 8927271**

(43) Date of publication of application:
**26.06.91 Bulletin 91/26**

(84) Designated Contracting States:
**AT BE CH DE DK ES FR GR IT LI LU NL SE**

(71) Applicant: **APV CORPORATION LIMITED**
**Westfield Road**
**Peterborough PE3 6TA(GB)**

(72) Inventor: **Eade, Charles Arthur**
**17 Angus Court**
**Petersborough PE3 6BE(GB)**

(74) Representative: **Boutland, John Anthony et al**
**Barker, Brettell & Duncan Prudential**
**Buildings 97-101 Above Bar Street**
**Southampton SO9 4GT(GB)**

(54) **Improvements in or relating to apparatus for crimping.**

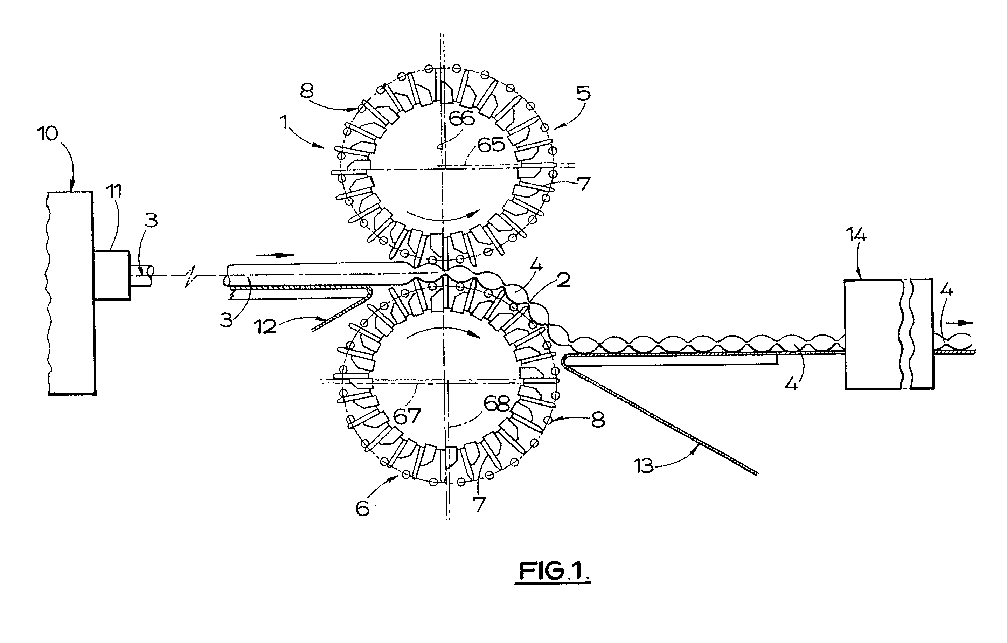

㊗ With reference to Figure 1, apparatus 1 for crimping, at longitudinally-spaced intervals 2, a continuous rope 3 of jam-filled dough so as to form discrete "pillows" 4 is illustrated thereby.

The apparatus 1 comprises a pair of rotatable rolls 5, 6. Each roll carries a plurality of equi-spaced and radially-extending crimping blades 7, whereby the blades 7 of one roll co-operate with the blades 7 of the other roll to effect crimping of the material.

Each roll 5, 6 of the apparatus 1 is provided with a cage-like fender 8 for displacing any of the plastic material away from the blades 7 after crimping.

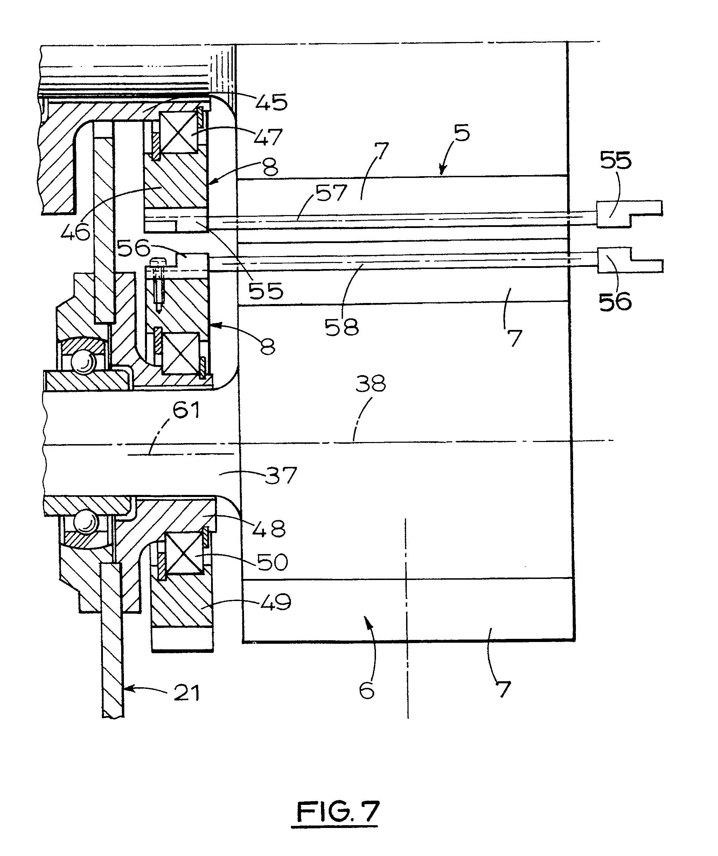

Each fender 8 comprises rods 57 (or 58) end-located by eccentrially-movable rings 46, 49 (Figure 7). The rods move relative to, as well as with, the blades 7, as the blades rotate, by contact between the blades and the rods.

FIG.1.

EP 0 434 238 A2

## IMPROVEMENTS IN OR RELATING TO APPARATUS FOR CRIMPING

This invention relates to apparatus for crimping and is concerned with apparatus for crimping, at longitudinally-spaced intervals, a continuous length (rope) of plastic material, such as an extruded length of dough enclosing an edible product.

More specifically, the invention is concerned with crimping apparatus comprising a pair of rotatable rolls, each carrying a plurality of radially-extending blades whereby the blades of one roll cooperate with the blades of the other roll to effect crimping of the length of plastic material.

When the plastic material is of a sticky nature, the crimped material tends to adhere to the blades so as to be carried round therewith. This leads to fouling of the crimping blades and associated structure, and causes distortion of newly-crimped material.

According to the invention, apparatus for crimping, at longitudinally-spaced intervals, a continuous length of plastic material comprises a pair of rotatable rolls, each carrying a plurality of radially-extending crimping blades, whereby the blades of one roll cooperate with the blades of the other roll to effect crimping of the material, and fender means for displacing plastic material away from the blades after crimping.

The fender means preferably comprise structure movable relative to, as well as with, the blades as the blades rotate.

The fender structure is preferably movable relative to the blades by contact between the structure and the blades.

The fender structure preferably comprises a plurality of elongate members disposed laterally between the blades and about a central axis of rotation which is eccentric relative to the axis of the associated roll.

An embodiment of the invention will now be described by way of example only, with reference to the accompanying drawings, wherein:

Figure 1 is a side view which illustrates the apparatus for crimping in a simplified form,

Figure 2 is a side view, in section, of the apparatus in non-simplified form,

Figure 3 is an end view, looking in the direction of arrow III of Figure 2,

Figure 4 is a plan view, seen in the direction of arrow IV of Figure 3, and

Figures 5, 6 and 7 are enlarged details of Figures 1, 2 and 3 respectively.

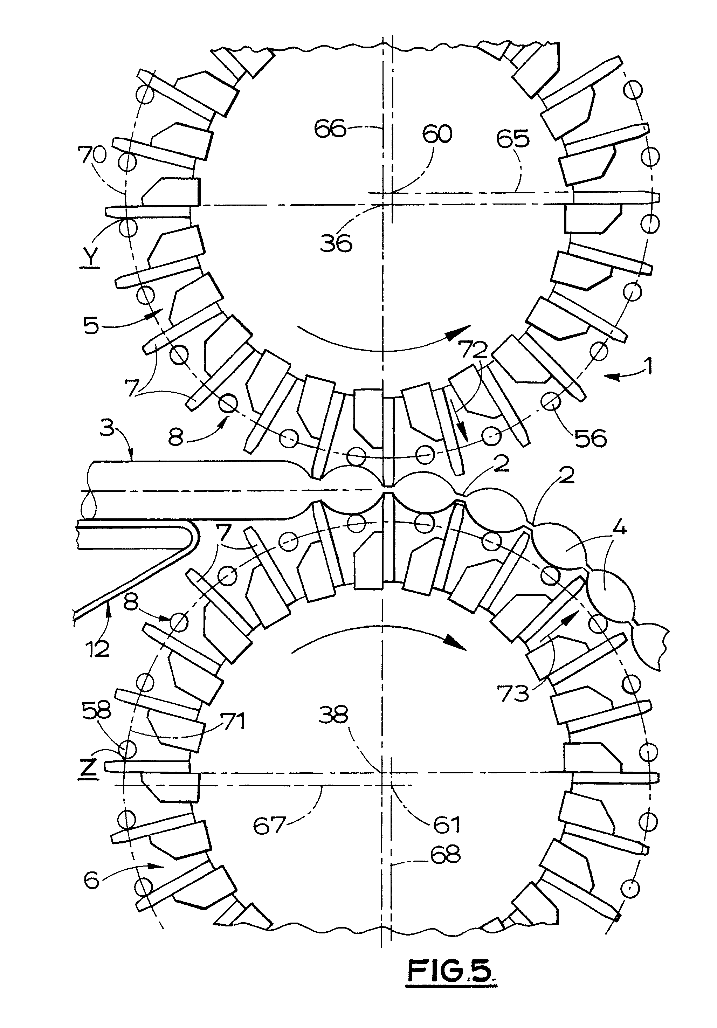

With reference first to Figures 1 and 5, apparatus 1 for crimping, at longitudinally-spaced intervals 2, a continuous length or rope 3 of plastic material so as to form discrete "pillows" 4 is illustrated thereby.

The material 3 of this example comprises a tube of soft (and sticky) dough enclosing a filling of jam or other edible product. Crimping has the effect of sealing in the filling.

The apparatus 1 comprises a pair of rotatable rolls 5, 6. Each roll carries a plurality of equi-spaced and radially-extending crimping blades 7, whereby the blades 7 of one roll co-operate (as shown) with the blades 7 of the other roll to effect crimping of the material. As explained hereinafter in detail, each roll 5, 6 of the apparatus 1 is provided with fender means 8 for displacing any of the plastic material away from the blades 7 after crimping.

The apparatus 1 of this example is used in conjunction with an extruding machine 10 which supplies extruded material 3 to the apparatus first by way of an extrusion nozzle 11 and then by way of an inlet conveyor 12. A discharge conveyor 13 transports crimped material 3 to a cooler/drier unit 14. Thereafter the pillows 4 are separated.

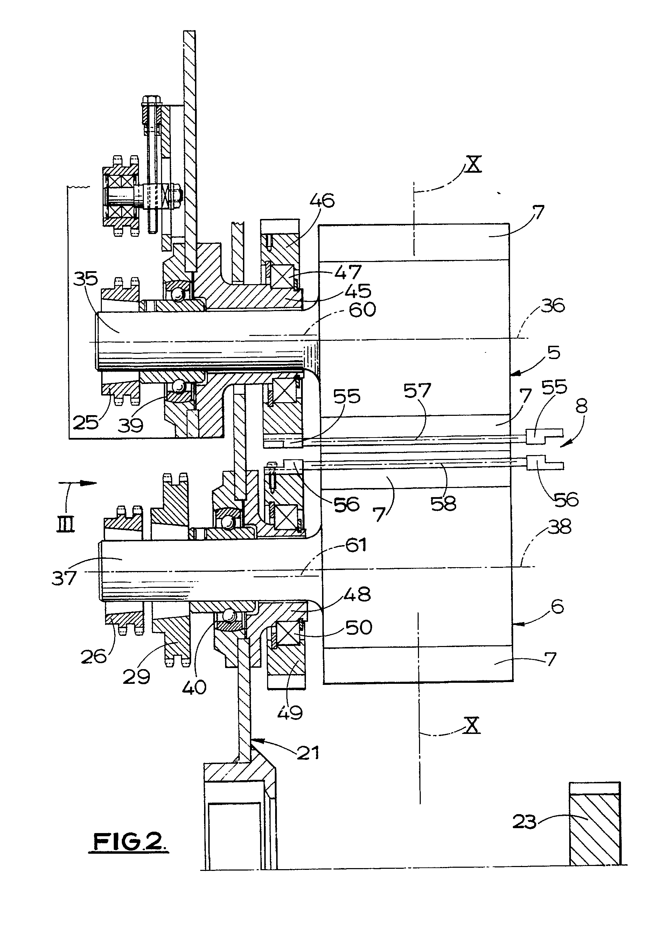

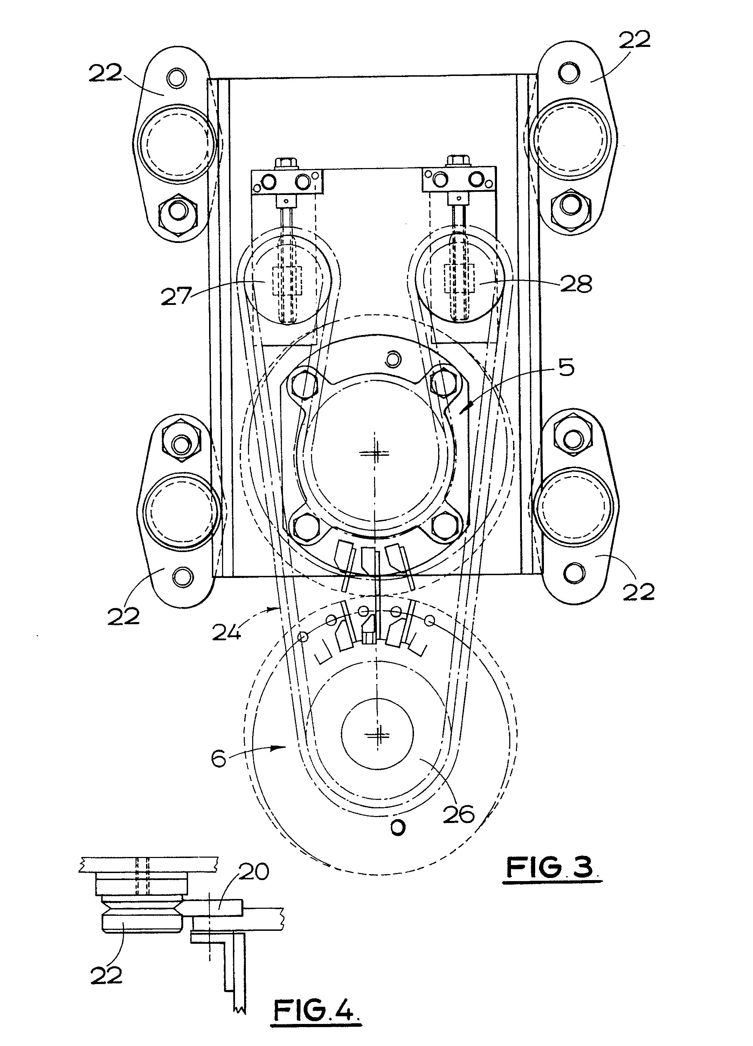

With reference now to Figures 2, 3, 6 and 7, the rolls 5, 6 are mounted on a movable support 20 carried by a stationary frame 21. The support 20 is adjustably movable vertically between fixed "V" guides 22 (see also Figure 4). The frame 21 is mounted on a base structure 23 (Figure 2).

The rolls 5, 6 are rotated simultaneously by a double chain drive 24, which employs co-operating sprocket pairs 25, 26, 27 and 28. The sprocket pair 25 is used to rotate roll 5, and the sprocket pair 26 is rotated by the roll 6. The sprocket pairs 27, 28 are used to adjust tension in the chain drive 24 and to achieve angular synchronisation of the blades 7 of the roll 5 relative to the blades 7 of the roll 6 so that, as the rolls 5, 6 rotate, a blade 7 of the upper roll 5 is brought into alignment with a blade 7 of the lower roll 6 (see Figure 5).

Another sprocket pair, namely pair 29, is used, together with chain drive (not shown) to rotate roll 6 and thereby roll 5, which is interconnected thereto by the chain drive 24. The chain drive mounted on sprocket pair 29 is driven by an electric motor (not shown) by way of a speed reduction unit (also not shown).

Rotation of the rolls 5 and 6 is in the same direction and at the same speed.

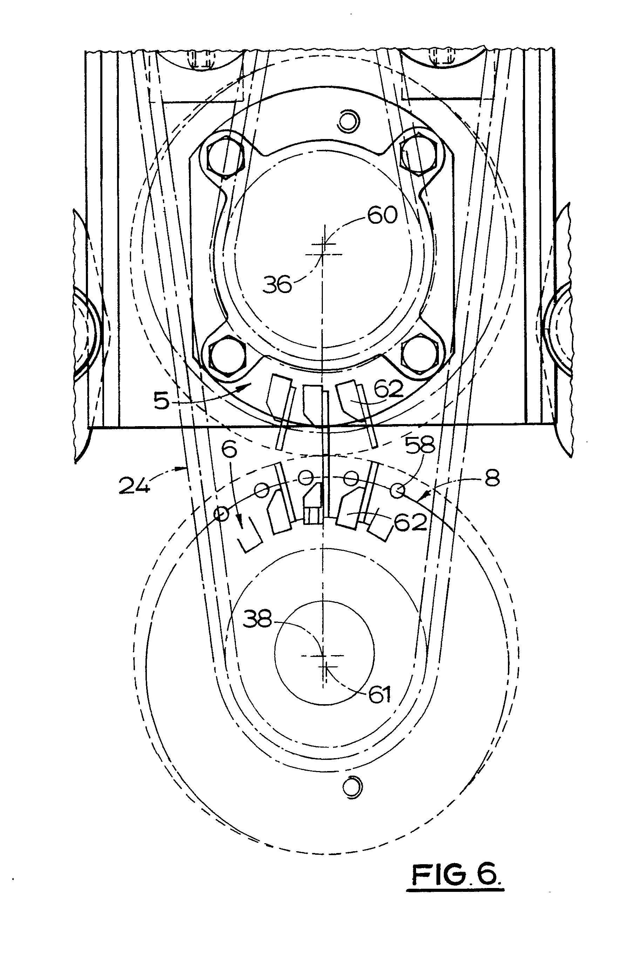

It should be noted that, in Figures 3 and 6, a pair of blades 7 of rolls 5 and 6 are shown contiguous. This is the setting required when separation of pillows 4 is required to be performed by blades 7.

The upper roll 5 has a central stub shaft 35, rotatable about axis 36. The sprocket pair 25 is mounted on the stub shaft 35. Similarly, the lower roll 6 has a stub shaft 37, rotatable about axis 38. The sprocket pairs 26 and 29 are mounted on the stub shaft 37. The stub shafts 35, 37 are rotatable in bearing assemblies 39, 40 respectively.

The stub shaft 35 is rotatable within a stationary block 45 and a ring 46 is mounted on a bearing 47 supported by the block. Similarly, the stub shaft 37 is rotatable within a stationary block 48 and a ring 49 is mounted on a bearing 50 supported by the block.

Rings of equi-spaced blocks 55, 56 extend around, and are secured to, the peripheries of the rings 46, 47 respectively. The blocks 55, 56 are disposed so as to be aligned with the gaps defined by adjacent pairs of crimping blades 7 of a roll 5 or 6.

The blocks 55, 56 support elongate members in the form of rods 57, 58 respectively, which are disposed laterally between the pairs of blades 7.

With specific reference to Figure 2, on the right-hand side of the vertical plane X, there are non-illustrated components identical to components 35, 37, 45, 46, 47, 48, 49 shown on the left-hand side of the plane. Consequently, the blocks 55, 56 on the right-hand side of plane X are supported by the non-illustrated rings 46, 49 and associated components.

The pairs of rings 46, 49 are eccentrically mounted so as to be rotatable about axes 60, 61, which are offset to axes 36, 38 of blade 7 rotation. The pairs of rings 46, 49 freely rotate about their eccentric axes 60, 61.

The rods 57, 58 and ring pairs 46, 49 together form two cage-like structures, each of which comprises a means 8.

With reference to Figures 1 and 5, the intersecting horizontal and vertical planes 65, 66 (in the case of axis 60) and 67, 68 (in the case of axis 61) indicate the degree of eccentric offset given to the ring pairs 46, 49.

As best shown in Figure 6, each crimping blade 7 is removably secured in place by detachable blocks 62. Screws (not shown) are used to secure the blocks 62.

In operation, and with reference to Figure 5, as the rolls 5, 6 rotate together, their associated cage-like means 8 are carried round with the rolls, by contact (at points Y and Z) between the blades 7 and the rods 57, 58. Because of the eccentric rotation of each of the means 8, their rods 57, 58 are caused to move relative to the side surfaces of the blades 7 they contact, whereby the rods tend to be displaced outwards with respect to those blades 7 which have just performed their crimping function.

This displacement of the rods 57, 58, which is gradual, tends to push the just-formed pillows 4 away from the blades 7. Figure 5 illustrates the rotary paths 70, 71 taken by the rods 56, 58 and the arrows 72, 73 of the Figure indicate the outward displacement of the rods.

The pushing action, ie displacement, of the rods 57, 58 can be varied according to the degree of eccentricity given to the pairs of rings 46, 49, which is also variable, either by use of replacement rings or by built-in adjustment means (not shown).

The apparatus 1 operates with a low level of noise output, due to the gradual take up movement between the crimping blades 7 and the rods 57, 58.

## Claims

1. Apparatus for crimping, at longitudinally-spaced intervals, a continuous length of plastic material comprising a pair of rotatable rolls, each carrying a plurality of radially-extending crimping blades, characterised in that (C.I.T.) the blades (7) of one roll (5) co-operate with the blades (7) of the other roll (6) to effect crimping of the material (3), and fender means (8) for displacing plastic material away from the blades after crimping.

2. Apparatus as claimed in claim 1, C.I.T. the fender means (8) comprises structure (57, 58) movable relative to, as well as with, the blades (7), as the blades rotate.

3. Apparatus as claimed in claim 2, C.I.T. the fender structure (57, 58) is movable relative to the blades (7) by contact between the structure (57, 58) and the blades (7).

4. Apparatus as claimed in claim 1, 2 or 3, C.I.T. the fender structure each comprise a plurality of elongate members (57, 58) disposed laterally between the blades (7) of a roll (5 or 6) and about a central axis of rotation (60 or 61) which is eccentric relative to the axis (36 or 38) of said roll.

5. Apparatus as claimed in claim 4, C.I.T. the laterally-disposed elongate members (57, 58) are end-located by eccentrically-movable rings (46, 49).

6. Apparatus for crimping, substantially as hereinbefore described, with reference to the accompanying drawings.

FIG.1

**FIG.2.**

5

**FIG.3.**

**FIG.4.**

**FIG.5.**

FIG.6.

FIG. 7